# EUROPÄISCHE PATENTANMELDUNG

(11) **EP 1 878 938 A2**
(43) Veröffentlichungstag der Anmeldung: **16.01.2008**
(21) Anmeldenummer: 07012883.0
(22) Anmeldetag: 30.06.2007
(51) Int. Cl.: F16F 9/04

(54) **Luftfeder mit Schwingungsdämpfer**

(30) Priorität: 12.07.2006 DE 102006032208
(71) Anmelder: ZF Friedrichshafen AG, 88038 Friedrichshafen (DE)
(72) Erfinder: Jaeckel, Rainer, 97525 Schwebheim (DE)

(57) **Zusammenfassung**

Schwingungsdämpfer (1), umfassend einen Zylinder (3) und eine darin axial bewegliche Kolbenstange (5), wobei die Kolbenstange über ein Anschlusslager (31) an einem zu bedämpfenden Bauteil angeschlossen und der Zylinder (3) in einem Hüllrohr (11) angeordnet ist, wobei der Zylinder außenseitig einen Tragring (7) aufweist, der sich über eine lösbare Befestigungsscheibe (15) axial an dem Hüllrohr abstützt und ein weiteres Lager (53) eine Winkelbewegung des zu bedämpfenden Bauteils zu einer tragenden Baugruppe ausgleicht, wobei das Hüllrohr endseitig einen Boden (13) aufweist, an dem das weitere Lager befestigt ist und in Richtung des Bodens eine axiale Stützfläche (9) für den Tragring aufweist, wobei die lösbare Befestigungsscheibe aus Richtung der Kolbenstange zugänglich ist.

## Beschreibung

Die Erfindung betrifft eine Luftfeder mit einem Schwingungsdämpfer gemäß dem Oberbegriff von Patentanspruch 1.

Aus der DE 199 59 842 A1 ist eine Luftfeder mit einem Schwingungsdämpfer bekannt. Die Luftfeder umfasst einen Deckel, der über ein kardanisches Stiftgelenk mit einer Kolbenstange des Schwingungsdämpfers verbunden ist. Dem Deckel schließt sich ein Rollbalg an, der endseitig an einem Abrollrohr befestigt ist. Das Abrollrohr wiederum ist mit einer Vorspannhülse verschweißt, die an einem Fahrwerk angeschraubt ist. Die Vorspannhülse ist in Richtung des Fahrwerks endseitig offen, so dass der Schwingungsdämpfer nach dem Lösen einer Befestigungsscheibe, die einen Dichtring an einem schwingungsdämpferseitigen Tragring vorspannt, nach unten, d. h. in Richtung des Fahrwerks demontierbar ist. Das Anschlusslager, das von dem Dichtring, der Vorspannhülse und der Befestigungsscheibe gebildet wird, ist notwendig, da das Fahrwerk zum Fahrzeugaufbau eine Winkelbewegung ausführt, die von dem Stiftgelenk an der Kolbenstange und dem Anschlusslager am Schwingungsdämpfer kompensiert wird. Aufgrund der Doppelfunktion "Dichten" und "Winkelbeweglichkeit" des Anschlusslagers kommt nur eine Ausführung als kardanische Lagerung in Frage.

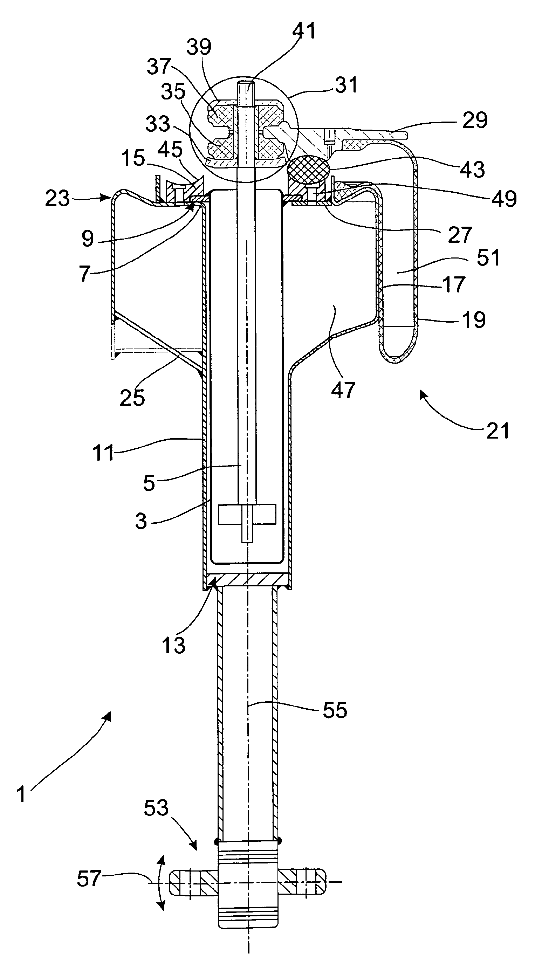

Die EP 0 000 287 A1 betrifft eine Luftfeder mit einem koaxialen Schwingungsdämpfer. In der Ausführung nach Fig. 2 kommt ein Drehgelenk zwischen der Kolbenstange des Schwingungsdämpfers und einem vollständig geschlossenen Boden des Abrollrohres der Luftfeder zur Anwendung. Eine Demontage des Schwingungsdämpfers aus der Luftfeder ist ohne vorherige Demontage der Luftfeder nicht möglich.

Aus der DE 28 49 100 A1 ist ein Schwingungsdämpfer bekannt, der in einem Außenrohr geführt ist. An dem Außenrohr ist seitlich ein Radzapfen ausgeführt. In Richtung eines Fahrzeugaufbaus besteht eine Stiftgelenkanbindung an einem Stoßdämpferzylinder. Die Kolbenstange des Schwingungsdämpfers ist mit einem Außenrohr-Boden verschraubt. Die Verschraubung ist gut zugänglich, so dass der Schwingungsdämpfer nach dem Lösen der Verschraubung in Richtung des oberen Endes des Außenrohres aus diesem entfernt werden kann. Vielfach wird anstelle des seitlichen Radzapfens ein Ringlager zur Anbindung des Schwingungsdämpfers z. B. an eine Fahrzeugachse gefordert. Ein derartiges Ringlager ist jedoch aufgrund der notwendigen Zugänglichkeit des Außenrohr-Bodens nicht anwendbar.

Die Aufgabe der vorliegenden Erfindung besteht darin, einen auswechselbaren Schwingungsdämpfer zu realisieren, bei dem eine beliebige Anschlusslagerbauform verwendet werden kann.

Erfindungsgemäß wird die Aufgabe dadurch gelöst, dass das Hüllrohr endseitig einen Boden aufweist, an dem das weitere Lager befestigt ist und in Richtung des Bodens eine axiale Stützfläche für den Tragring aufweist, wobei die lösbare Befestigungsscheibe aus Richtung der Kolbenstange zugänglich ist.

Der große Vorteil besteht darin, dass durch die Verwendung eines Bodens, der nicht für die axiale Befestigung des Schwingungsdämpfers benötigt wird, ein beliebiges Anschlusslager verwendet werden kann, also auch ein Ringlager. Des Weiteren kann man den Schwingungsdämpfer nach oben, d. h. in Richtung des zu bedämpfenden Bauteils entfernen. Diese Demontagerichtung ist für den Monteur häufig angenehmer und leichter zu vollziehen als in Richtung des tragenden Bauteils, z. B. einem Fahrzeugrad.

In weiterer vorteilhafter Ausgestaltung liegt zwischen der Innenseite des Hüllrohrs und dem Zylinder des Schwingungsdämpfers ein radialer Abstand vor. Eine leichte Schiefstellung zwischen dem Tragring und dem Zylinder des Schwingungsdämpfers kann hingenommen werden, ohne die Funktionstüchtigkeit des Schwingungsdämpfers zu beeinflussen.

Gemäß einem vorteilhaften Unteranspruch steht die Kolbenstange mit einer Druckanschlagfeder in Wirkverbindung, die auf einer Anschlagfläche zur Anlage kommt, die von der Befestigungsscheibe bereitgestellt wird.

Des Weiteren übernimmt das Hüllrohr eine Zusatzfunktion, indem es eine Abrollkontur für einen Rollbalg einer Luftfeder aufweist.

In weiterer vorteilhafter Ausgestaltung ist die Kolbenstange über ein Stiftgelenk mit einem Luftfederdeckel verbunden, wobei das Stiftgelenk zwei Elastomerelemente aufweist, die sich unterhalb und oberhalb des Luftfederdeckels abstützen. Das Stiftgelenk lässt sich sehr leicht demontieren, so dass auch der Luftfederdeckel entfernt werden kann, um die Verbindung des Schwingungsdämpfers zum Hüllrohr zu lösen.

Zusätzlich besteht die Möglichkeit, dass das Hüllrohr mit seinem Boden einen Ringraum bildet, der über mindestens eine Öffnung mit einem vom Rollbalg begrenzten Federraum verbunden ist.

Anhand der folgenden Figurenbeschreibung soll die Erfindung näher erläutert werden.

Die einzige Figur zeigt einen Schwingungsdämpfer 1 beliebiger Bauart mit einem Zylinder 3 und einer darin axial beweglich angeordneten Kolbenstange 5. Der Zylinder 3 verfügt am kolbenstangenaustrittsseitigen Ende über einen umlaufenden Tragring 7, der sich an einer Stützfläche 9 eines Hüllrohres 11 abstützt. Das Hüllrohr 11 nimmt den Zylinder 3 auf und verfügt endseitig über einen geschlossenen Boden 13. Die besagte Stützfläche 9 am Hüllrohr 11 weist in Richtung des Bodens 13. Auf der Oberseite des Tragrings 7 greift eine Befestigungsscheibe an, die mit der Stützfläche 9 des Hüllrohrs 11 verschraubt ist. Somit ist die Befestigungsscheibe 15 aus Richtung der Kolbenstange 5 zur Montage oder Demontage des Schwingungsdämpfers 1 zugänglich. Zwischen der Innenseite des Hüllrohrs 11 und dem Zylinder 3 des Schwingungsdämpfers 1 liegt ein radialer Abstand vor, so dass ein gewisser Schiefstand des Tragrings 7 die Funktionsfähigkeit des Schwingungsdämpfers nicht negativ beeinflusst.

Das Hüllrohr 11 weist eine Abrollkontur 17 für einen Rollbalg 19 einer Luftfeder 21 auf. Im linken Halbschnitt wird die Abrollkontur von einem nach außen gerundeten Kragen 23 gebildet, der nach radial innen von einem eingeschweißten Stützring 25 stabilisiert wird. Diese Variante lässt sich leicht herstellen. Im rechten Halbschnitt kommt ein Hüllrohr 11 zur Anwendung, dass am Innendurchmesser eine eingeschweißte Stützscheibe 27 mit der Stützfläche 9 für den Tragring 7 aufweist.

Das andere Ende des Rollbalgs 19 stützt sich an einem Luftfederdeckel 29 ab, der über ein kolbenstangenseitiges Anschlusslager 31 in der Bauform eines Stiftgelenks mit der Kolbenstange 5 verbunden. Das Stiftgelenk verfügt über eine untere Gelenkscheibe 33 auf einem Absatz der Kolbenstange 5. Die Gelenkscheibe 33 nimmt einen unteren Elastomerkörper 35 auf, der an der Unterseite bzw. der Innenseite des Luftfederdeckels 29 anliegt. Spiegelbildlich zum Luftfederdeckel verfügt das Stiftgelenk über einen oberen Elastomerkörper 37 und eine obere Gelenkscheibe 39, wobei das Stiftgelenk über einen Gewindezapfen 41 der Kolbenstange 5 vorspannbar ist.

In Wirkverbindung mit der Kolbenstange 5 bzw. dem Luftfederdeckel 29 steht eine Druckanschlagfeder 43 in der Bauform eines Elastomerrings, der hubabhängig auf einer Anschlagfläche 45 der Befestigungsscheibe 15 zur Anlage kommt.

Das Hüllrohr 11 mit seinem Boden 15 bildet einen Ringraum 47, der über mindestens eine Öffnung z. B. in der Befestigungsscheibe mit einem Federraum 51 der Luftfeder 21 verbunden ist.

Neben dem kolbenstangenseitigen Anschlusslager 31 verfügt der Schwingungsdämpfer 1 über ein weiteres Lager 53 , das an dem Boden 13 befestigt ist und die Verbindung zu einem tragenden Bauteil, z. B. einer Fahrzeugachse oder einem Fahrzeugrahmen in der Anwendung eines Kabinenschwingungsdämpfers, herstellt. In der Figur ist ein Ringlager dargestellt, das neben einer Winkelbewegung zur Längsachse 55 des Schwingungsdämpfers 1 auch eine Drehbewegung um eine Querachse 57 ermöglicht.

Sollte der Schwingungsdämpfer die Verschleißgrenze erreicht haben, kann die Luftfeder 21 sehr leicht geöffnet werden, indem man die obere Gelenkscheibe 39 entfernt, das obere Elastomerelement 37 abnimmt und den Luftfederdeckel 29 abhebt. Nun sind nicht dargestellte Befestigungsschrauben zwischen der Befestigungsscheibe 15 und der Stützfläche 9 des Hüllrohrs 11 zugänglich, so dass die Befestigungsscheibe 15 ebenfalls demontiert werden kann. Danach kann der Schwingungsdämpfer 1, der sich in beiden Axialrichtungen über seinen Tragring 7 am Hüllrohr 11 abstützt, aus dem Hüllrohr 11 gezogen werden.

## Patentansprüche

1. Schwingungsdämpfer (1), umfassend einen Zylinder (3) und eine darin axial bewegliche Kolbenstange (5), wobei die Kolbenstange (5) über ein Anschlusslager (31) an einem zu bedämpfenden Bauteil angeschlossen und der Zylinder (3) in einem Hüllrohr (11) angeordnet ist, wobei der Zylinder (3) außenseitig einen Tragring (7) aufweist, der sich über eine lösbare Befestigungsscheibe (15) axial an dem Hüllrohr (11) abstützt und ein weiteres Lager (53) eine Winkelbewegung des zu bedämpfenden Bauteils zu einer tragenden Baugruppe ausgleicht,
**dadurch gekennzeichnet,**
**dass** das Hüllrohr (11) endseitig einen Boden (13) aufweist, an dem das weitere Lager (53) befestigt ist und in Richtung des Bodens (53) eine axiale Stützfläche (9) für den Tragring (11) aufweist, wobei die lösbare Befestigungsscheibe (15) aus Richtung der Kolbenstange (5) zugänglich ist.

2. Schwingungsdämpfer nach Anspruch 1,
**dadurch gekennzeichnet,**
**dass** zwischen der Innenseite des Hüllrohrs (11) und dem Zylinder (3) des Schwingungsdämpfers (1) ein radialer Abstand vorliegt.

3. Schwingungsdämpfer nach Anspruch 1,
**dadurch gekennzeichnet,**
**dass** die Kolbenstange (5) mit einer Druckanschlagfeder (43) in Wirkverbindung steht, die auf einer Anschlagfläche (45) zur Anlage kommt, die von der Befestigungsscheibe (15) bereitgestellt wird.

4. Schwingungsdämpfer nach Anspruch 1,
**dadurch gekennzeichnet,**
**dass** das Hüllrohr (11) eine Abrollkontur (17) für einen Rollbalg (19) einer Luftfeder (21) aufweist.

5. Schwingungsdämpfer nach Anspruch 4,
**dadurch gekennzeichnet,**
**dass** die Kolbenstange (5) über ein Stiftgelenk (31) als Anschlusslager mit einem Luftfederdeckel (29) verbunden ist, wobei das Stiftgelenk (31) zwei Elastomerelemente (35; 37) aufweist, die sich unterhalb und oberhalb des Luftfederdeckels (29) abstützen.

6. Schwingungsdämpfer nach Anspruch 4,
**dadurch gekennzeichnet,**
**dass** das Hüllrohr (11) mit seinem Boden (15) einen Ringraum (47) bildet, der über mindestens eine Öffnung (49) mit einem vom Rollbalg (19) begrenzten Federraum (51) verbunden ist.
